Europäisches Patentamt

European Patent Office

Office européen des brevets

(11) Veröffentlichungsnummer: **0 046 864**
B1

(12) EUROPÄISCHE PATENTSCHRIFT

(45) Veröffentlichungstag der Patentschrift:
06.04.83

(51) Int. Cl.³: **F 26 B  13/30,** B 29 B  3/04

(21) Anmeldenummer: 81105565.6

(22) Anmeldetag: 15.07.81

(54) Verfahren und Vorrichtung zum Entfernen von Wasser, das an Strängen aus thermoplastischen Kunststoffen anhaftet.

(30) Priorität: 27.08.80  DE 3032198

(43) Veröffentlichungstag der Anmeldung:
10.03.82 Patentblatt 82/10

(45) Bekanntmachung des Hinweises auf die Patenterteilung:
06.04.83 Patentblatt 83/14

(84) Benannte Vertragsstaaten:
BE CH DE FR GB IT LI NL

(56) Entgegenhaltungen:
US-A-3 191 210

(73) Patentinhaber: BASF Aktiengesellschaft,
Carl-Bosch-Strasse 38, D-6700 Ludwigshafen (DE)

(72) Erfinder: Elbs, Peter, Altrheinstrasse 2,
D-6701 Otterstadt (DE)
Erfinder: Jeserich, Wolfgang-Dieter, Dr.,
Anselm-Feuerbach-Strasse 12, D-6710 Frankenthal (DE)
Erfinder: Hoerauf, Werner, Dr., Homburger Strasse 10,
D-6700 Ludwigshafen (DE)
Erfinder: Wehr, Rudolf, Dr., Mandelring 15,
D-6706 Wachenheim (DE)

# Verfahren und Vorrichtung zum Entfernen von Wasser, das an Strängen aus thermoplastischen Kunststoffen anhaftet

Die Erfindung betrifft ein Verfahren und eine Vorrichtung zum Entfernen von Wasser, das an Strängen aus thermoplastischen Kunststoffen anhaftet. Bei der Herstellung von thermoplastischen Kunststoffen wird die Schmelze in Stränge gegossen, in einem Wasserbad abgekühlt und dann in Granuliervorrichtungen zerkleinert. Den aus dem Wasserbad austretenden Kunststoffsträngen haftet Wasser an und gelangt in die Granuliervorrichtungen wodurch dort Schäden hervorgerufen werden. Hierdurch wird ein häufiger Wechsel der Granuliervorrichtungen erforderlich. Es wurde schon versucht, durch mechanisches Abstreifen des Wassers z. B. mit Schwämmen Abhilfe zu schaffen. Diese Arbeitsweise ist jedoch sehr anfällig und wenig zuverlässig. Es wurde auch schon versucht, anhaftendes Wasser von den Strängen durch Anblasen mit Luft zu entfernen (vgl. US-A-3191210). Hierzu sind jedoch eine Vielzahl von Düsen und grosse Druckluftmengen erforderlich, was sehr aufwendig ist.

Insbesondere bei der Herstellung von Granulat aus Polylactamen ist anhaftendes Wasser nachteilig. Die Eigenwärme des Granulats reicht zur Trocknung nicht aus, da das anhaftende Wasser zuviel Wärme entzieht. Dadurch ergeben sich Schwierigkeiten beim Fördern, da das nasse Granulat an der Rohrwand klebt. Beim Lagern extrahiert das anhaftende Wasser aus dem Granulat Lactam, wodurch Verbackungen auftreten und der Auslauf des Lagerbehälters durch die verminderte Rieselfähigkeit des Granulats blockiert wird. Schliesslich löst das anhaftende lactamhaltige Wasser aus den Granuliervorrichtungen die dort verwendeten Schmiermittel was zur Verunreinigung des Granulats, z. B. zu fluoreszierenden Granulatkörnern, führt.

Es war deshalb die technische Aufgabe gestellt, das an thermoplastischen Kunststoffsträngen anhaftende Wasser auf einfache und wirkungsvollere Weise als bisher zu entfernen.

Diese Aufgabe wird gelöst in einem Verfahren zum Entfernen von Wasser, das an Strängen aus thermoplastischen Kunststoffen anhaftet, wobei man die Stränge jeweils über mindestens zwei Düsenöffnungen führt und durch die Düsenöffnungen Luft mit einer Geschwindigkeit von 1 bis 50 m/sec gemessen an der Düsenöffnung, saugt.

Ferner ist Gegenstand der Erfindung eine Vorrichtung zum Entfernen von Wasser, das an Strängen aus thermoplastischen Kunststoffen anhaftet, gekennzeichnet durch ein Gehäuse in Form eines Walzensegmentes mit einer Öffnung zum Absaugen, Führungsrillen für die Kunststoffstränge an der gekrümmten Seite des Segments dem Verlauf der Krümmung folgend sowie mindestens zwei Öffnungen in jeder Führungsrille zum Ansaugen von Luft.

Das neue Verfahren hat den Vorteil, dass es sehr einfach und wirkungsvoll ist. Darüber hinaus hat das neue Verfahren den Vorteil, dass die Granulatkörner nicht mehr verbacken und verschmutzen. Ferner hat das neue Verfahren den Vorteil, dass die Granuliervorrichtungen weniger störanfällig sind. Schliesslich ist die neue Vorrichtung einfach, raumsparend und betriebssicher.

Stränge aus thermoplastischen Kunststoffen sind solche aus Polystyrol, kautschukmodifiziertem Polystyrol, Styrolacrylnitrilpolymerisaten, Polyamiden, wie Polyamid 66 oder Polycaprolactam, Polyacetalen oder Polyestern wie Polyäthylenterephthalat oder Polybutylenterephthalat oder Polyolefinen. Solche Stränge erhält man durch Extrudieren von thermoplastischen Kunststoffen, die in Masse polymerisiert oder polykondensiert werden, oder beim Einfärben von solchen Polymerisaten in geeigneten Extrudern. Hierbei wird das geschmolzene Polymerisat durch Giessen in Stränge geformt und dann in einem Wasserbad abgekühlt. Solche Stränge haben in der Regel einen Durchmesser von 1 bis 5 mm und werden im allgemeinen mit einer Geschwindigkeit von 1 bis 5 m/sec abgezogen und dann granuliert. Besondere technische Bedeutung hat das erfindungsgemässe Verfahren und die Vorrichtung erlangt beim Entfernen von Wasser von Polylactam-Strängen, insbesondere solchen aus Polycaprolactam.

Erfindungsgemäss führt man jeden Strang einzeln über mindestens zwei Düsenöffnungen. Diese Düsenöffnungen sind zweckmässig in Bewegungsrichtung des Kunststoffstranges hintereinander angeordnet. In der Regel genügen bereits zwei hintereinander angeordnete Düsenöffnungen. Durch diese Düsenöffnungen wird Luft angesaugt mit einer Geschwindigkeit von 1 bis 50 m/sec gemessen an der Düsenöffnung. Hierdurch wird das an den Strängen anhaftende Wasser abgesaugt. Es ist bemerkenswert, dass die Entfernung des Wassers von den thermoplastischen Kunststoffsträngen einwandfrei gelingt, obwohl diese nur einseitig über die Düsenöffnungen geführt werden. Vorteilhaft haben die Düsenöffnungen einen Durchmesser der dem 1,2- bis 3-fachen, insbesondere dem 1,2- bis 2-fachen Durchmesser des thermoplastischen Kunststoffstranges entspricht. Es hat sich ferner als vorteilhaft erwiesen, wenn man die thermoplastischen Kunststoffstränge in einem Abstand über die Düsenöffnungen führt, der dem 0,1- bis 1,2-fachen des Durchmessers eines Kunststoffstranges entspricht und hierbei die vorgenannte Absauggeschwindigkeit einhält.

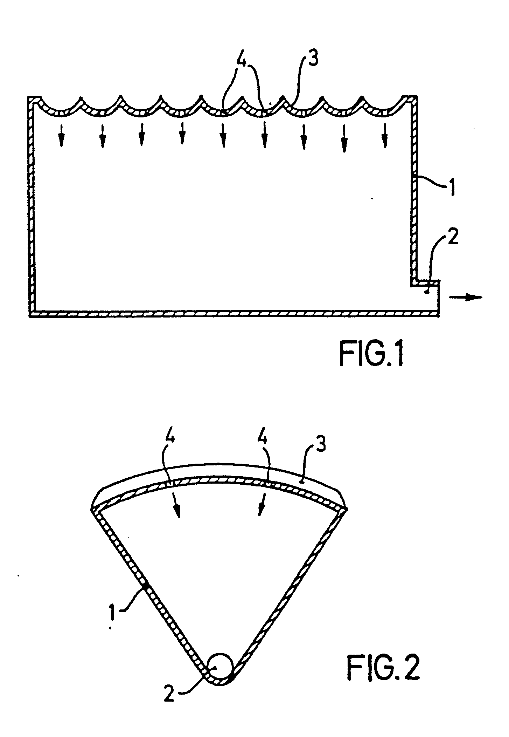

Eine geeignete Vorrichtung zur Durchführung des Verfahrens wird beispielsweise in Figuren 1 und 2 gezeigt.

Fig. 1 zeigt einen Längsschnitt der Vorrichtung:
1 ist ein Gehäuse in Form eines Walzensegmentes

2 ist eine Öffnung zum Absaugen von Luft und Wasser

3 sind Führungsrillen für die Kunststoffstränge an der gekrümmten Seite des Segments dem Verlauf der Krümmung folgend

4 sind Düsenöffnungen zum Ansaugen von Luft.

Fig. 2 zeigt den Querschnitt der Vorrichtung:

1 ist ein Gehäuse in Form eines Walzensegmentes

2 ist eine Öffnung zum Absaugen von Luft und Wasser

3 ist eine Führungsrille

4 sind Düsenöffnungen zum Ansaugen von Luft.

Die Vorrichtung besteht demnach aus einem Gehäuse 1 in Form eines walzenförmigen Segmentes dem unten an einer beliebigen Seite eine Öffnung 2 zum Absaugen von Wasser und Luft angeordnet ist, so dass das Wasser ungehindert ablaufen kann. An der gekrümmten Seite des Segments dem Verlauf der Krümmung folgend weist das Gehäuse Führungsrillen 3, die zweckmässig parallel angeordnet sind, auf. Vorteilhaft beträgt der Radius des Walzensegments 15 bis 40 cm. Die Führungsrillen 3 können eine beliebige Form haben, z. B. rund sein. In jeder Führungsrille sind mindestens 2 Düsenöffnungen 4, zweckmässig an der tiefsten Stelle der Rille, angeordnet. Vorteilhaft haben die Düsenöffnungen 4 in jeder Führungsrille einen Abstand von einigen cm und sind über die Gesamtzahl der Führungsrillen bei jeweils zwei Düsenöffnungen in zwei Reihen parallel angeordnet.

Das vorteilhafteste Prinzip der erfindungsgemässen Arbeitsweise besteht somit darin, dass man einen Strang aus thermoplastischem Kunststoff dem Wasser anhaftet, über eine kreisförmig gebogene Führungsrille leitet, wobei der thermoplastische Strang über einen Teil des Kreisbogens aufliegt und vor und nach der Auflagestelle in geringem Abstand über Düsenöffnungen geführt wird, durch die Luft angesaugt und somit das an dem thermoplastischen Strang anhaftende Wasser abgesaugt wird.

Vorteilhaft führt man den Strang aus thermoplastischem Kunststoff zunächst im 0,8- bis 1,2-fachen Abstand des Strangdurchmessers über die erste Öffnung (Vertrocknung) und dann im 0,1- bis 0,3-fachen Abstand des Strangdurchmessers über die zweite Düsenöffnung (Nachtrocknung). Dies lässt sich unschwer durch geringfügiges Schwenken des Walzensegments um seine Achse einstellen.

## Patentansprüche

1. Verfahren zum Entfernen von Wasser, das an Strängen aus thermoplastischen Kunststoffen anhaftet, dadurch gekennzeichnet, dass man die Stränge jeweils über mindestens zwei Düsenöffnungen führt und durch die Düsenöffnungen Luft mit einer Geschwindigkeit von 1 bis 50 m/sec gemessen an der Düsenöffnung, ansaugt.

2. Verfahren nach Anspruch 1, dadurch gekennzeichnet, dass man die thermoplastischen Kunststoffstränge mit einer Geschwindigkeit von 1 bis 5 m/sec über die Düsenöffnungen führt.

3. Verfahren nach den Ansprüchen 1 und 2, dadurch gekennzeichnet, dass man die Stränge aus thermoplastischen Kunststoffen zuerst im Abstand der dem 0,8- bis 1,2-fachen des Strangdurchmessers entspricht über eine erste Düsenöffnung führt und dann im Abstand der dem 0,1- bis 0,3-fachen des Strangdurchmessers entspricht über eine zweite Düsenöffnung führt.

4. Vorrichtung zum Entfernen von Wasser, das an Strängen aus thermoplastischen Kunststoffen anhaftet, gekennzeichnet durch ein Gehäuse (1) in Form eines Walzensegmentes mit einer Öffnung (2) zum Absaugen, Führungsrillen (3) für die Kunststoffstränge an der gekrümmten Seite des Segments, dem Verlauf der Krümmung folgend, sowie mindestens zwei Düsenöffnungen (4) in jeder Führungsrille zum Ansaugen von Luft.

## Claims

1. A process for removing water adhering to strands of thermoplastics, wherein the strands are each passed over not less than two nozzle orifices through which air is drawn in at a velocity of 1–50 m/sec, measured at the nozzle orifice.

2. A process as claimed in claim 1, wherein the thermoplastic strands are passed over the nozzle orifices at a velocity of 1–5 m/sec.

3. A process as claimed in claims 1 and 2, wherein the strands of thermoplastics are first passed over a first nozzle orifice at a distance corresponding to 0.8–1.2 times the strand diameter and then over a second nozzle orifice at a distance corresponding to 0.1–0.3 times the strand diameter.

4. Apparatus for removing water adhering to strands of thermoplastics, which comprises a housing (1) in the form of a roll segment having a suction orifice (2), guide grooves (3), for the plastic strands, on the curved side of the segment and following its curvature, and two or more nozzle orifices (4), for drawing in air, in each guide groove.

## Revendications

1. Procédé pour l'élimination de l'eau adhérant à des boudins de matière thermoplastique, caractérisé en ce que l'on fait passer les boudins au-dessus d'au moins deux ajutages d'aspiration, à travers lesquels on aspire de l'air avec une vitesse, mesurée au niveau de l'entrée des ajutages, comprise entre 1 et 50 m/s.

2. Procédé suivant la revendication 1, caractérisé en ce que la vitesse de passage du boudin de matière thermoplastique au-dessus des ajutages d'aspiration est comprise entre 1 et 5 m/s.

3. Procédé suivant les revendications 1 et 2, caractérisé en ce que l'on fait passer les boudins de matière thermoplastique au-dessus d'un premier ajutage à une distance correspondant à 0,8–1,2 fois le diamètre du boudin et au-dessus d'un deuxième ajutage à une distance égale à 0,1–0,3 fois le diamètre du boudin.

4. Dispositif pour l'élimination de l'eau adhérant à des boudins de matière thermoplastique, caractérisé en ce qu'il est constitué d'un boîtier (1) en forme d'un secteur de cercle, comportant une ouverture d'aspiration (2), des rainures de guidage (3) pour les boudins de matière plastique, épousant la courbure, sur la partie courbe du secteur, et dans chaque rainure de guidage au moins deux ajutages d'aspiration (4), à travers lesquels est aspiré de l'air.

FIG.1

FIG.2